# NEW EUROPEAN PATENT SPECIFICATION

(11) **EP 0 756 014 B2**
(45) Date of publication and mention of the opposition decision: **20.02.2008**
(45) Mention of the grant of the patent: 19.09.2001
(21) Application number: 95111857.9
(22) Date of filing: 27.07.1995
(51) Int. Cl.: C22B 21/00, F27B 7/20

(54) **Method for smelting aluminum, scrap and remainders containing aluminum**
Verfahren zum Schmelzen von Aluminium, Schrott und Aluminiumrückständen
Procédé pour fondre l'aluminium, les déchets et résidus contenant de l'aluminium

(43) Date of publication of application: 29.01.1997
(73) Proprietor: AIR PRODUCTS AND CHEMICALS, INC., Allentown, PA 18195-1501 (US); Alustockach GmbH, 78333 Stockach (DE)
(72) Inventor: Schwalbe, Franz Michael, D-78333 Stockach (DE); Langemeyer, Gregor, D-40699 Erkrath (DE); Scharf, Roland, D-45468 Mühlheim a.d. Ruhr (DE)
(74) Representative: Schwabe - Sandmair - Marx

(56) References cited:
- EP-A- 0 475 128
- DE-A- 4 115 269
- DE-A- 4 231 777
- DE-U- 8 912 136
- US-A- 4 983 214
- Gross G. et al.: "Ol-Sauerstoff-Brenner für Industrieöfen"; Gas aktuell, n. 31-June 1986, pages 13 - 18
- WO 93/17135 (AGA Aktiebolag) 02 September 1993
- Ullmans Encyklopädie der technischen Chemie, 4. Auflage, Band 12, Verlag Chemie 1976, page 592
- Ullmans Encyklopädie der technischen Chemie, 4. Auflage, Band 5, Verlag Chemie 1976, page 897
- Conference Paper: New Tools for Improved Operation of High - Efficiency Electric Arc Furnaces pp. 87, 89 - 91, in 1992 Electric Furnace Conference Proceedings

## Description

The present invention relates to a method of smelting aluminum, scrap and remainders containing aluminum in rotary drum furnaces.

Aluminum, scrap and remainders containing aluminum are smelted in rotating cylindrical furnaces, so-called rotary drum furnaces, into which the material to be smelted is charged with the aid of a charging device at the so-called charging end. For this purpose, firstly a furnace door is swivelled open from a furnace port before charging is done and then the door is swivelled back in place on the furnace. Subsequently a burner disposed in the door is put into operation. However, due to the smelting burner being disposed in the charging door, the latter is very difficult to seal-close satisfactorily to consistently prevent the infiltration of unwanted air.

The waste gases materializing during the smelting process are brought out by an exhaust duct from the furnace at the end thereof opposite to the charging door. The direction in the flow of the furnace gases and burner waste gases is thus the same and in parallel.

Since however infiltrating air may enter the furnace, this method has the disadvantage that due to this infiltrating air the volume of waste gas resulting from the smelting procedure and also the oxygen partial pressure in the waste gas volume are increased.

If organic components such as e.g. paper, plastics, rubber, paints, etc. are present in the material to be smelted, these are pyrolysed when the volatilization temperature is attained and, when oxygen is deficient, brought out through the exhaust duct from the furnace as uncombusted hydrocarbons.

The gas cleaning systems usually employed, comprising a cooler, an injection system for lime, hydrate of lime etc. to bind the acidic waste gas components and the subsequent fabric filter are not able to completely eliminate these hydrocarbons. A further disadvantage of the aforementioned method is thus the emission of hydrocarbons along with the waste air to the environment.

DE-U-89 12 136 discloses a drum furnace . This drum furnace comprises a discharge end which is on the opposite side of the charging end, whereas the exhaust end of the drum furnace is on the same side as the charging end. Disadvantageously, in such a construction, the charging end is occupied by the burner and may therefore only be sealclosed with high effort. Furthermore, there is a danger that waste gas flow may escape through the charging inlet, in which the burner is arranged.

In DE 41 15 269 A1 a method of smelting metal in a furnace is described in which the metal is heated by a primary burner disposed at a first location on the furnace

and the waste gases leave the furnace at a second location at which a secondary burner is provided to incinerate the emitted waste gases and simultaneously to also heat the metal.

This method has, however, the disadvantage that a further burner additional to the primary burner needs to be employed and that due to the additional burner the volume of waste gas is increased. Furthermore, the furnace door cannot be safeguarded against infiltratation of unwanted air.

From EP 0 475 128 A1 a method is known in which the material to be smelted is heated up in a furnace with a firing burner, the waste gases substantially flowing from the firing burner to the exhaust duct of the furnace and gas rich in oxygen being introduced into the furnace, preferably by means of an oxygen lance or an oxygen injection burner, whereby the pulsating movement of the gas from the firing burner and that of the gas rich in oxygen are not in the same direction in parallel to each other.

This method has the disadvantage that an additional device such as e.g. an oxygen lance or an oxygen injection burner needs to be provided on the furnace to introduce gas rich in oxygen thereinto. When the firing burner and oxygen injection burner are disposed at opposite ends of the furnace to achieve the opposite sense in direction of the pulsating movement of the gases, the firing burner is provided in the charging door, this being the reason why it is difficult to seal off against the ingress of infilitrating unwanted air. This results in the aforementioned disadvantage of the waste gas volume being increased.

A method of smelting slurry, soot, oxides and scrapings as acknowledging the opening clause of claim 1 is known from the Article "Öl-Sauerstoff-Brenner für Industrieöfen" in "Gas-Aktuell", June 1986. The application of such oil/oxygen burners for smelting iron, steel, nonferrous metals, glass an ceramics are likewise indicated.

A control of the smelting process and/ or a gas-analysis are not mentioned.

The object of the present invention is to provide a method which diminishes the noxious content of the waste gases.

This object is achieved by a method having the features given in claim 1.

The subclaims are aimed at expedient embodiments of the invention.

The advantages achieved by the invention are based on the following mode of functioning: the burner of the rotary drum furnace is disposed at the same end as the port of the furnace for the exhaust duct and thus at the end opposite to the charging door so that the directions in the flow of the burner gases and furnace waste gases are parallel and in the opposite direction.

By this positioning of the burner it is possible to eliminate the former dual function of the furnace door as charging door and support for the burner, it now exclusively being employed as the charging door. Accordingly, the door can now be configured seal-closing and thus seal off the furnace completely from the ingress of infiltration air.

By sealing off the furnace from infiltration air the volume of waste gas flowing through the exhaust duct is reduced. This advantage is particularly effective when using oxygen burners which have the advantage that pure oxygen, contrary to air having a proportion of approx. 79% nitrogen, permits achieving a substantially reduced volume of waste gas and a significantly higher flame temperature. This advantage is also maintained in the proposed method if the furnace is operated at constant vacuum pressure, since due to the seal-closing of the furnace door the volume of infiltration air entering the furnace is not increased due to the relatively elevated pressure predominating outside, as was formerly the case with previous known methods.

A further advantage of this arrangement of the burner in the furnace is that the direction of flow of the flame and thus also that of the oxygen crosses that of the waste gas flowing from the furnace into the exhaust duct. Now, the hydrocarbons produced during smelting can be subsequently incinerated by the burner and the resulting liberated energy can be made use of for the smelting process, thus saving primary energy and reducing the noxious content of the waste gases.

Yet a further advantage of this arrangement of the burner in the furnace is that the noxious substances liberated during charging can now be subsequently incinerated at any time due to the burner being continuously in operation.

Due to the invention the additional advantage of reducing the velocity in the flow of gases in the furnace is achieved by reducing the volume of the waste gases so that the dust content discharged from the furnace is substantially diminished. This also results in a reduction of the smelting salt consumed since the boundary layer between salt ceiling and gas space in which the latter evaporates is torn open less frequently due to the lower velocity of the flow of the gases. In addition, the dwelling time of the waste gases in the furnace is longer so that the noxious substances contained in the waste gas can be better incinerated.

In one preferred embodiment an oxygen burner is employed as the smelting burner due to the volume of waste gases then being less and the flame temperature higher than with an air burner.

Preferably the rotary movement of the furnace and/or the volume of burner fuel are adapted to the charging material, since due to the rotary movement new surfaces are repeatedly liberated so that the volume of evaporated hydrocarbons can fluctuate and differing amounts of charging material also require differing amounts of energy for smelting.

Particularly preferred is a configuration of the charging door of the rotary drum furnace allowing the charging port to be seal-closed so that no unwanted air can infiltrate into the furnace. In this arrangement the door is disposed on the furnace so that it is able to rotate with the latter. Due to this optimum sealing of the furnace, fuel efficiencies are also achieved which were formerly not attained.

According to the invention a waste gas measuring device is provided in the exhaust duct permitting control of the volume of fuel and combustion air or combustion oxygen as a function of the gases flowing through the exhaust pipe of the furnace, as a function of the concentration of hydrocarbons. An optical means is used to the waste gas measurement.

Preferably, charging the furnace is done continuously, e.g. via a gating system so that smelting is sequenced without opening the furnace and thus without allowing gases to enter into or escape from the furnace. Preferably the smelting burner generates a long flame extending relatively far into the furnace so that also the smelt located further away from the burner receives an adequate supply of heat. One major advantage of the method is that in its form as described the burner combines the function of the primary burner with that of the secondary burner.

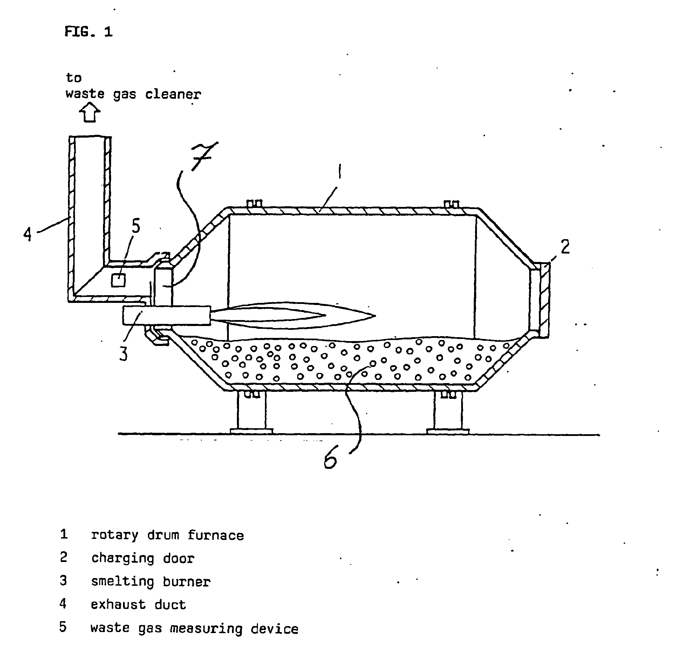

The invention will now be described in detail by way of a preferred embodiment with reference to the attached drawing, the sole Figure of which shows a vertical section through an apparatus according to the invention for smelting aluminum, scrap and remainders containing aluminum with which the method according to the invention may be implemented.

In the inside of a cylindrically shaped rotary drum furnace 1 the charging stock 6 is deposited. The two ends of the rotary drum furnace 1 are tapered. At one end a charging door 2 is provided, through which the charging stock 6 is introduced into or brought out of the furnace. At the end of the charging event the charging door may be connected to the rotary drum furnace 1 seal-closed.

At the end of the rotary drum furnace 1 opposite to that of the charging door 2 a smelting burner 3 is provided. The smelting burner 3 is located in a waste gas port 7 to which the exhaust duct 4 connects so as to permit the exit of the waste gas resulting from smelting. The smelting burner 3 is protected against hot corrosion since it is located in the hot flow of waste gas. In the exhaust duct 4 a waste gas measuring device 5 is disposed with which the concentration of hydrocarbons in the waste gas can be measured.

The charging door 2 of the rotary drum furnace 1 corotates with the latter in operation thereof. The smelting burner 3 and the exhaust duct 4 at the opposite ends are disposed non-rotating, however.

In the smelting process a flame is generated by the burner 3 which extends far into the furnace 1. Due to the heat applied by the flame the charging stock 6 smelts with continuous rotation of the furnace 1 so that a more-or-less consistent smelting of the stock is achieved.

The waste gas materializing from this smelting procedure is introduced through the waste gas port 7 into the exhaust duct 4, it thereby flowing past the flame of smelting burner 3 so that noxious substances contained in the waste gas such as e.g. hydrocarbons can be incinerated.

The waste gas measuring device 5 disposed in the exhaust duct 4 establishes the concentration of the hydrocarbons contained in the waste gas for adjusting the volume of fuel and/or combustion air or oxygen required for combustion applied to the burner 3 as a function of the sensed concentration so that the energy offered in the furnace, resulting from the combustion of the fuel and the incineration of the hydrocarbons, is maintained constant, to ensure an homogenous sequence in the smelting procedure and to minimize the noxious substances in the waste gas resulting from the smelting process.

At the start of the smelting process firstly the organic components present in the charging stock 6 are pyrolysed which results in a high concentration of hydrocarbons in the furnace 1. This is why the burner 3 is initially operated overstoichiometrically so that more oxygen gains access to the furnace 1 than is necessary for combusting the volume of fuel supplied through the burner 3. With this additional oxygen the hydrocarbons present in the furnace 1 are incinerated so that the concentration thereof as measured by the waste gas measuring device 5 in the exhaust duct 4 is reduced.

On completion of volatilizaton of the organic components of the charging stock 6 which is established by the reduction in hydrocarbons content by the waste gas measuring device 5 the burner 3 is again operated stoichiometrically or weakly understoichiometrically with added power so that the fuel availability via the burner 3 increases in the furnace 1 and smelting of the charging stock 6 is quickly attained, the concentration of oxygen in the furnace 1 being slight so as to avoid loss of aluminum.

The concentration by volume of the noxious substances resulting from pyrolysis during smelting such as e.g. hydrocarbons depends, among other things, on the rotative speed of the furnace 1, thus by means of the waste gas measuring device 5 the rotary movement of the furnace 1 may be adjusted so that the volume of noxious substances is further minimized.

## Claims

1. A method of smelting aluminum and aluminum containing scrap and remainders, in a rotary drum furnace (1) having only one burner, said method comprising the following features:
a) at one end of said rotary drum furnace (1) charging stock (6) is introduced into said rotary drum furnace (1) through a charging door (2);
b) the charging stock (6) is taken from said rotary drum furnace (1);
c) fuel and gas containing oxygen are introduced into said rotary drum furnace (1) through the burner (3) disposed at one end of said rotary drum furnace (1), and are combusted in said furnace (1); and
d) waste gas (4) is exhausted from one end of said rotary drum furnace (1);
wherein
e) the charging door (2) is used for taking said charging stock (6) from said rotary drum furnace (1);
f) said burner (3) is disposed at the exhaust end of the rotary drum furnace (1) and
g) said exhaust end is opposite said charging door (2);
**characterized in, that**
h) organic components are present in the charging stock (6) and result in noxious substances from pyrolysis during smelting the stock (6), that
i) the concentration of hydrocarbons, contained in the waste gas in an exhaust duct (4) is measured by an optical method, and that
j) the volume of the combustion air and combustion oxygen respectively and/or the volume of the fuel for said burner (3) is set as a function of the measured concentration of said substances.

2. The method as set forth in claim 1, wherein a gas having a oxygen content of at least 80% is employed as said gas containing oxygen.

3. The method as set forth in any of the preceding claims, wherein a continuous charging of said rotary drum furnace (1) is undertaken.

4. The method as set forth in any of the preceding claims, wherein energy and/or oxygen is continuously supplied to said furnace (1).

5. The method as set forth in any of the preceding claims, wherein the rotary movement (speed and direction of rotation) of said furnace is set as a function of the nature and quantity of the charging stock (6).

6. The method as set forth in any of the preceding claims, wherein the volume of the combustion air and combustion oxygen respectively and/or the volume of the fuel for said burner (3) is set as a function of the nature and quantity of the charging stock (6).

7. The method as set forth in one of the claims 3 to 6, wherein the rotary movement (speed and direction of rotation) of said furnace is set as a function of the measured concentration of substances.

8. The method as set forth in any of the preceding claims, wherein a relatively long flame is generated by said burner (3).

9. The method as set forth in one of the claims 1 to 8, wherein said charging door (2) of said furnace (1) is rotated together with the furnace (1) in a seal-closed state.

## Patentansprüche

1. Verfahren zum Schmelzen von Aluminium und Aluminium, das Schrott und Rückstände enthält, in einem Drehtrommelofen (1) mit nur einem Brenner, wobei das Verfahren die folgenden Merkmale aufweist:
a) an einem Ende des Drehtrommelofens (1) wird Beladungsmaterial (6) in den Drehtrommelofen (1) durch eine Ladetür (2) eingebracht;
b) das Beladungsmaterial (6) wird aus dem Drehtrommelofen (1) herausgenommen;
c) Brennstoff und Gas, das Sauerstoff enthält, werden durch den Brenner (3), der an einem Ende des Drehtrommelofens (1) angeordnet ist, in den Drehtrommelofen (1) eingebracht und im Ofen (1) verbrannt; und
d) Abgas (4) wird von einem Ende des Drehtrommelofens (1) abgelassen;
wobei
e) die Ladetür (2) verwendet wird, um das Beladungsmaterial (6) aus dem Drehtrommelofen herauszunehmen;
f) der Brenner (3) an dem Auslassende des Drehtrommelofens (1) angeordnet ist; und
g) das Ablassende der Ladetür gegenüberliegt;
**dadurch gekennzeichnet, dass**
h) organische Komponenten in dem Beladungsmaterial (6) vorhanden sind und aus der Pyrolyse während des Schmelzens des Beladungsmaterials (6) zu schädlichen Substanzen führen; dass
i) die Konzentration der Kohlenwasserstoffe, die in dem Abgas in der Abgasleitung (4) vorhanden sind, durch ein optisches Verfahren gemessen wird, und dass
j) das Volumen der Verbrennungsluft bzw. des Verbrennungs-Sauerstoffs und/oder das Volumen des Brennstoffes für den Brenner (3) als Funktion der gemessenen Konzentration der Substanzen eingestellt wird.

2. Verfahren nach Anspruch 1, bei dem ein Gas mit einem Sauerstoffgehalt von mindestens 80% als das Gas verwendet wird, das Sauerstoff enthält.

3. Verfahren nach einem der vorhergehenden Ansprüche bei dem eine kontinuierliche Beladung des Drehtrommelofens (1) vorgenommen wird.

4. Verfahren nach einem der vorhergehenden Ansprüche, bei dem dem Ofen (1) kontinuierlich Energie und/oder Sauerstoff zugeführt wird.

5. Verfahren nach einem der vorhergehenden Ansprüche, bei dem die Drehbewegung (Drehzahl und Drehrichtung) des Ofens als eine Funktion der Eigenschaften und der Menge des Beladungsmaterials (6) eingestellt wird.

6. Verfahren nach einem der vorhergehenden Ansprüche, bei dem jeweils das Volumen der Verbrennungsluft bzw. des Verbrennungs-Sauerstoffs und/oder das. Volumen des Brennstoffes für den Brenner als Funktion der Art und Menge des Beladungsmaterials (6) eingestellt werden.

7. Verfahren nach einem der Ansprüche 3 bis 6, bei dem die Drehbewegung (Drehzahl und Drehrichtung) des Ofens als Funktion der gemessenen Substanzenkonzentration eingestellt wird.

8. Verfahren nach einem der vorhergehenden Ansprüche, bei dem durch den Brenner (3) eine relativ lange Flamme erzeugt wird.

9. Verfahren nach einem der Ansprüche 1 bis 8, bei dem die Ladetür (2) des Ofens (1) zusammen mit dem Ofen in einem abdichtend geschlossenen Zustand gedreht wird.

## Revendications

1. Procédé pour fondre de l'aluminium et des ferrailles et résidus contenant de l'aluminium dans un four (1) à tambours rotatif doté d'un seul brûleur, ledit procédé comprenant les caractéristiques suivantes :
a) la matière chargée (6) est introduite dans ledit four (1) à tambour rotatif par une porte de chargement (2) située à une extrémité dudit four (1) à tambour rotatif ;
b) la matière chargée (6) est extraite dudit four (1) à tambour rotatif ;
c) du combustible et du gaz contenant de l'oxygène sont introduits dans ledit four (1) à tambour rotatif par l'intermédiaire du brûleur (3) disposé à une extrémité dudit four (1) à tambour rotatif et sont brûlés dans ledit four (1) ; et
d) les gaz brûlés (4) s'échappent par une extrémité dudit four (1) à tambour rotatif ;
dans lequel
e) la porte de chargement (2) est utilisée pour extraire ladite matière chargée (6) dudit four (1) à tambour rotatif ;
f) ledit brûleur (3) est disposé à l'extrémité d'échappement du four (1) à tambour rotatif, et
g) ladite extrémité d'échappement est opposée à la porte de chargement (2),
**caractérisé en ce que**
h) la matière chargée (6) contient de la matière organique qui dégage des substances nocives par pyrolyse pendant la fusion de la matière chargée (6),
i) **en ce que** la concentration en hydrocarbures dans les gaz de rejet est mesurée dans un conduit d'évacuation (4) par un procédé optique et
j) **en ce que** le volume d'air de combustion ou d'oxygène de combustion et/ou le volume de combustible destiné audit brûleur (3) sont fixés en fonction de la concentration en lesdites substances.

2. Procédé selon la revendication 1, dans lequel on utilise comme dit gaz contenant de l'oxygène un gaz présentant une teneur en oxygène d'au moins 80 %.

3. Procédé selon l'une quelconque des revendications précédentes, dans lequel on entreprend un chargement continu dudit four (1) à tambour rotatif.

4. Procédé selon l'une quelconque des revendications précédentes, dans lequel de l'énergie et/ou de l'oxygène sont délivrés en continu audit four (1).

5. Procédé selon l'une quelconque des revendications précédentes, dans lequel le déplacement de rotation (vitesse et sens de rotation) dudit four est réglé en fonction de la nature et de la quantité de la matière chargée (6).

6. Procédé selon l'une quelconque des revendications précédentes, dans lequel le volume de l'air de combustion et de l'oxygène de combustion, respectivement, et/ou le volume du combustible pour ledit brûleur (3) sont réglés en fonction de la nature et de la quantité de la matière chargée (6).

7. Procédé selon l'une des revendications 3 à 6, dans lequel le déplacement de rotation (vitesse et sens de rotation) dudit four est réglé en fonction de la concentration mesurée de substances.

8. Procédé selon l'une quelconque des revendications précédentes, dans lequel une flamme relativement longue est créée par ledit brûleur (3).

9. Procédé selon l'une des revendications 1 à 8, dans lequel ladite porte de chargement (2) dudit four (1) est mise en rotation avec le four (1) dans des conditions de fermeture étanche.
